(19) Europäisches Patentamt
European Patent Office
Office européen des brevets

(11) Veröffentlichungsnummer : **0 388 487 B1**

(12) **EUROPÄISCHE PATENTSCHRIFT**

(45) Veröffentlichungstag der Patentschrift :
27.05.92 Patentblatt 92/22

(51) Int. Cl.$^5$ : **B09B 5/00**

(21) Anmeldenummer : **89104982.7**

(22) Anmeldetag : **20.03.89**

(54) **Verfahren zur Entfernung von Schadstoffen aus verunreinigtem Boden und Anlage zu dessen Durchführung.**

(43) Veröffentlichungstag der Anmeldung :
26.09.90 Patentblatt 90/39

(45) Bekanntmachung des Hinweises auf die
Patenterteilung :
27.05.92 Patentblatt 92/22

(84) Benannte Vertragsstaaten :
AT BE CH DE ES FR GB GR IT LI LU NL SE

(56) Entgegenhaltungen :
EP-A- 0 185 831
EP-A- 0 250 639
EP-A- 0 285 231
EP-A- 0 303 339
HANDBOEK BODEMSANERINGSTECHNIE-
KEN, Ausgabe 1, Teil II, Juli 1983, Seiten
19-21,47-54, Staatsuitgeverij, Den Haag, NL

(73) Patentinhaber : **Miljoevern Umwelt-Technik
GmbH
Bredenscheider Strasse 89
W-4320 Hattingen (DE)**
Patentinhaber : **Harbauer GmbH & Co. KG
Heerstrasse 16
W-1000 Berlin 19 (DE)**

(72) Erfinder : **Schade, Horst, Dipl.-Ing.
In der Marpe 16
W-4320 Hattingen (DE)**
Erfinder : **Wilko, Werner
Forstweg 7 a
W-1000 Berlin 28 (DE)**

(74) Vertreter : **Finkener und Ernesti Patentanwälte
Heinrich-König-Strasse 119
W-4630 Bochum 1 (DE)**

EP 0 388 487 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Entfernung von Schadstoffen aus verunreinigtem Boden, bei dem der von groben Bestandteilen durch Sieben oder Brechen vorgereinigte Boden einer Extraktion durch mit Zusatzmitteln versetztes Waschwasser unterworfen, der Boden anschließend vom Waschwasser getrennt, mit Spülwasser nachgespült und das Spülwasser durch einen Reinigungsprozeß von den aus dem Boden extrahierten Schadstoffen befreit wird.

Ein derartiges Verfahren ist beispielsweise aus der europäischen Patentanmeldung 84 730 152.0, die unter der Nummer 0 185 831 veröffentlicht wurde, bekannt.

Mit den zum Stande der Technik gehörenden Verfahren können theoretisch nahezu alle Schadstoffe aus dem Boden entfernt werden. Bei der praktischen Durchführung haben sich dadurch wesentliche Einschränkungen ergeben, daß die Anteile der Böden mit einem Korngrößenbereich von 0 bis 10 bzw. 20 μm größtenteils eine plättige Struktur aufweisen und aufgrund der großen äußeren und inneren Oberfläche ein hohes Adsorptionsvermögen für Schadstoffe haben. Hochsiedende feste Schadstoffträger wie Teer, Asphalt, Kohle etc. sind teilweise verbacken mit Quarzkörnern oder anderen Bodenbestandteilen und sind wie Holz, Holzkohle und andere meist organische Schadstoffträger mit einer großen inneren Oberfläche in jedem kontaminierten Boden vorhanden. Mit Wasser und mit Zusätzen von umweltfreundlichen Chemikalien können die Schadstoffe aus derartigen Böden selbst bei gleichzeitigem Einsatz von großer mechanischer Energie, z. B. in Form von Schwingungen als Ultraschall oder Prallenergie nicht in ausreichendem Maße abgelöst oder gelöst werden. Die Feinstoffe müssen deshalb durch trockene oder nasse Klassierverfahren abgetrennt und im Falle der nassen Trennung eingedickt und entwässert werden, so daß sie weiterhin als Sonderabfall anfallen. Die organischen Schadstoffträger (Leichtstoffe), die meist als Verbackung mit Quarz mit einer Dichte von < 1,6 kg/dm³ vorliegen, werden nur zum geringen Teil aufgelöst bzw. abgeschieden.

Die Aufgabe, die der Erfindung zugrunde liegt, besteht darin, ein Verfahren der gattungsgemäßen Art so auszubilden, daß ein verunreinigter Boden auch dann in technisch und wirtschaftlich vertretbarer Weise von den Schadstoffen befreit werden kann, wenn er feinste Festbestandteile mit plättiger Struktur, deren Korngröße im Regelfall unter 20 μm liegt sowie Bestandteile von hochsiedenden Schadstoffen und Trägermaterial von Schadstoffen (Leichtstoffe) enthält.

Ausgehend von einem Verfahren der eingangs beschriebenen Art besteht die Erfindung darin, daß der Extraktionsprozeß mit Waschwasser, weitgehend getrennt von dem ein- oder mehrstufigen Spül- und Sortierprozeß durchgeführt wird, daß vor der Extraktion durch trockene oder nasse Klassierverfahren eine Feinstfraktion mit einer Korngröße bis 150 μm abgetrennt wird und daß die getrocknete Feinstfraktion einer Destillation bei einer Temperatur von 300 bis höchstens 600 °C unterworfen und von organischen Schadstoffen sowie von Cyanid- und Quecksilberverbindungen gereinigt wird.

Eine bevorzugte Ausführungsform der Erfindung sieht die Kombination der folgenden Merkmale vor:

a) Der verunreinigte Boden wird nach Abtrennung einer Fraktion mit einer Korngröße bis 150 μm zur Entfernung der Schadstoffe durch Extraktion mit Waschwasser mit hoher Energiedichte gewaschen und nachdem das Waschwasser weitgehend abgetrennt ist, durch Gegenstromspülung bei gleichzeitigem Sortieren nach Dichte und anschließendem Entwässern von Leichtstoffen und anhaftender Extraktionslösung befreit, worauf der Unterlauf der Sortierung mit einer Korngröße von 100 μm bis 4 mm entwässert und abgeführt wird, während der die Feinstoffe enthaltende Überlauf der Sortierung durch Flotation von Leichtstoffen befreit und das Sediment aus der Flotation, das die Fraktion mit einer Korngröße von 10 bis maximal 150 μm enthält, in einer Gegenstrom-Hydrozyklonanlage gespült wird.

b) Vor der Extraktion wird durch trockene oder nasse Klassierverfahren eine Feinstfraktion mit einer Korngröße bis 150 μm abgetrennt und im Falle einer Naßtrennung entwässert, eingedickt und einer Trocknung unterworfen.

c) Die getrocknete Feinstfraktion wird deagglomeriert und einer Vakuumdestillation bei einer Temperatur von etwa 380 °C bei einem Vakuum von 20 bis 100 Torr abs. Druck unterworfen, anschließend gekühlt und als gereinigtes Fertigprodukt ausgeschleust.

Daß es bei der erfindungsgemäßen Verfahrensweise möglich ist, die Feinstfraktion durch eine Vakuumdestillation in einem Temperaturbereich von etwa 380 °C von organischen Schadstoffen und anderen schädlichen Verbindungen zu befreien ist wegen der großen Oberfläche der feinen Teilchen überraschend und war für den Fachmann nicht vorauszusehen.

Die Erfindung sieht ferner vor, daß aus dem Boden vor der Abtrennung der Feinstfraktion mit einer Korngröße bis 150 μm die groben Bestandteile mit einer Korngröße über 4 mm abgetrennt und gesondert nach Abscheidung der Leichtstoffe gespült, entwässert, nachgewaschen und als Kiesfraktion ausgeschleust werden. Erfindungsgemäß können die groben Bestandteile mit einer Korngröße über 4 mm auch nach der Extraktion abgetrennt und gesondert nach Abscheidung der Leichtstoffe gespült, entwässert, nachgewaschen und als Kiesfraktion ausgeschleust werden.

Gemäß einem weiteren Merkmal der Erfindung ist vorgesehen, daß der Unterlauf der Gegenstromspülung und Dichtesortierung mit einer Korngröße von 100 µm bis 4 mm entwässert und klassiert und das Spülwasser der Klassierung kaskadenförmig in die vorliegende Spülstufe eingeleitet wird, während das bei der Klassierung anfallende Produkt einer zweiten Gegenstromspülung und Dichtesortierung unterworfen, dann entwässert und, mit dem bei der Destillation anfallenden Fertigprodukt gemischt, als gereinigter Boden entsorgt wird.

Gemäß einem weiteren Merkmal der Erfindung wird der beim Eindicken anfallende ölhaltige Überlauf in einer der Abwasser-Aufbereitungsanlage vorgeschalteten Flotationsstufe flotiert. Es hat sich ferner als zweckmäßig erwiesen zum Trocknen der entwässerten Feinstfraktion Dampf oder ein anderes Heizmedium zu verwenden, die anfallenden Brüden von Feststoffen zu befreien und die Feststoffe wieder in den Trockner zurückzuleiten, während die Brüden zur Rückgewinnung der Energie kondensiert werden. Das bei der Kondensation anfallende Kondensat wird der Abwasser-Aufbereitungsanlage zugeführt, während die anfallende Abluft auf eine Temperatur von etwa 120 °C aufgewärmt und als Spülluft in den Prozeß zurückgeführt wird. Der Einsatz von Thermoöl oder Salzschmelzen als Wärmeträger für die indirekte Beheizung hat sich als besonders zweckmäßig erwiesen. Die Verweilzeit der getrockneten Feinstfraktion in der Vakuumdestillationseinheit soll erfindungsgemäß mehr als 1/2 bis 2 Stunden betragen.

Gegenstand der Erfindung ist ferner eine Anlage zur Durchführung des Verfahrens, bei der vorgesehen ist, daß die Abtrennung der Fraktion mit der Korngröße bis 150 µm vor der Extraktion des Bodens in einem Hydrozyklon erfolgt und die Behandlung des Unterlaufs des Hydrozyklons in einem Anmaischbehälter vorgenommen wird, in den mechanische Energie, vorzugsweise über ein Rührwerk mit regelbarer Drehzahl und-/oder Schwingungsenergie eingeleitet wird, daß dem Überlauf der Dichtesortier-Einrichtung ein Hydrozyklon nachgeschaltet ist, dessen Unterlauf der Flotationseinrichtung zugeleitet wird und daß die Einrichtung zur Aufbereitung des Abwassers aus einer Flotationsstufe mit nachgeschalteter Oxydations- oder Reduktionsstufe, einer Fällungs- und Flockungsstufe, einer Sedimentationsstufe, Filtrationsstufe sowie einer Ausblasekolonne (Stripper), einer Aktivkohlefilterstufe und einer Selektivaustauscherstufe besteht. Erfindungsgemäß besteht der Trockner aus einem Schneckentrockner mit Hohlschnecken, deren Flächen und Wandung als Wärmeüberträger dienen.

Auf der Zeichnung ist ein Ausführungsbeispiel der Erfindung dargestellt, es zeigen:

Fig. 1 Die Extraktions- und Abwasseraufbereitungsstufe einer Anlage zur Entfernung von Schadstoffen aus verunreinigtem Boden in schematischer Darstellung und

Fig. 2 ebenfalls schematisch, die Entwässerungs-, Trocknungs- und Destillationsstufe zur Behandlung der Feinstfraktion, die in der Fig. 1 dargestellten Behandlungsstufe anfällt.

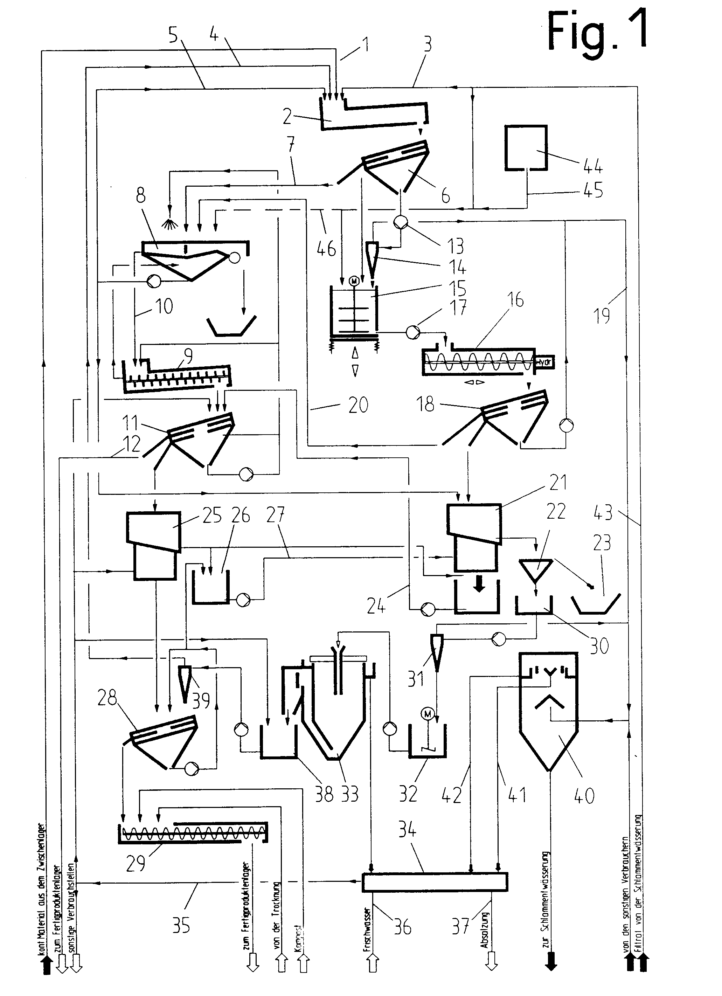

Das erfindungsgemäße Extraktionsverfahren ist in Fig. 1 dargestellt. Der kontaminierte gebrochene und gesiebte Boden wird von einem Zwischenlager über die Leitung (1) einem Schwertwäscher (2) zugeführt. Als Anmaischwasser wird Filtrat von der Schlammentwässerung, das über die Leitung (3) zugeführt wird, oder schon mehrfach genutztes Spülwasser verwendet, das über die Leitung (4 u. 5) in den Schwertwäscher eingeleitet wird. In dem Schwertwäscher (1) werden bindige Böden aufgelöst. Die gebildete Suspension wird auf ein Sieb (6) mit einem Siebdurchgang von etwa 4 mm aufgegeben. Der Überlauf des Siebes gelangt über die Leitung (7) auf einen Schwingsortierer (8), in dem die Leichtstoffe abgetrennt und die Grobfraktion mit einer Korngröße von über 4 mm vorgewaschen wird. Die Grobfraktion wird anschließend in einem Schwertwäscher (9), in den sie über die Leitung (10) gelangt, gespült, auf einem Doppelsieb (11) entwässert, nachgespült und dann dem Fertigproduktenlager als Kiesfraktion über die Leitung (12) zugeführt.

Der Siebdurchgang von Sieb (6) wird mittels einer Pumpe (13) einem Hydrozyklon (14) aufgegeben, in dem eine Fraktion mit einer Korngröße von 0 bis 150, vorzugsweise 0 bis 10 µm, abgetrennt wird. Der Unterlauf des Hydrozyklons wird in einen Anmaisch- und Waschbehälter (15) gegeben, dem die Waschchemikalien aus einer Chemikalien-Aufbereitungsstation (44) über die Leitung (45) zudosiert werden. Wie mit der gestrichelten Linie (46) angedeutet ist, können auch der Grobfraktion im Bereich des Schwingsortierers (8) Waschchemikalien zugeführt werden. In dem Anmaischbehälter (15) wird durch Einleiten von mechanischer Energie über ein Rührwerk, das vorzugsweise hydraulisch angetrieben wird und dessen Drehzahl regelbar ist, eine intensive Wäsche durchgeführt. In Ergänzung zum Rührwerk können selbstverständlich auch hydraulische oder Ultraschall- Schwingelemente benutzt werden. Die Extraktion wird in der nachfolgenden Extraktionsstufe (16), in die der Ablauf des Behälters (15) über eine Pumpe (17) gelangt, durch Einleiten von Schwingungsenergie intensiviert. Das so gewaschene Produkt wird über das nachgeschaltete Schwingsieb (18) vom Waschwasser (Extraktionsmittel) weitgehend befreit, das dem Eindickprozeß über die Leitung (19) zugeleitet wird. Eine alternative Verfahrensweise sieht ferner vor, auch die kiesigen Bestandteile wahlweise über die Wasch- und Extraktionsstufe (15 u. 16) zu leiten und erst in dem nachfolgenden Doppelsieb (18) aufzuteilen und über die Leitung (20) dem Schwingsortierer (8) zuzuführen.

Das Gut mit einer Korngröße von 0 bis 4 mm wird auf dem Schwingsieb (18) abgetrennt und auf einen Aufstromsortierer (21) aufgegeben, in dem es im Gegenstrom von unten mit Wasser beaufschlagt und von Leichtstoffen und der anhaftenden Extraktionslösung befreit wird. Die Leichtstoffe mit einer Dichte bis 1,8 kg/dm$^3$ werden über ein Sieb (22) mit einer Siebweite von 0,2 bis 0,5 mm abgetrennt und über einen Container (23) entsorgt. Der gespülte Unterlauf mit einer Korngröße von 100 μm bis 0,2 mm wird mittels einer Pumpe über die Leitung (24) dem Doppelsieb (11) zugeführt, entwässert und einem Aufstromsortierer (25) zur zweiten Spülung aufgegeben. Das Spülwasser dieser Stufe wird kaskadenförmig über eine Pumpenstation (26) und die Leitung (27) dem Aufstromklassierer (21) zugeführt. Das so gereinigte Produkt, das in dem Aufstromsortierer (25) anfällt, wird in einem Endproduktensieb (28) entwässert und über eine Mischschnecke (29) mit dem Produkt aus der Trocknung des Gutes mit einer Korngröße von 0 bis vorzugsweise 10 μm und gegebenenfalls mit Kompost zur Wiederbelebung des Bodens vermischt und zum Fertigproduktenlager abgeführt.

Die Feinstoffe, die als Ablauf des Siebes (22) anfallen und einen Korngrößenbereich von 10 bis 150, vorzugsweise 10 bis 100 μm haben, werden über eine Pumpenvorlage (30) einem Hydrozyklon (31) zugeführt, dessen Unterlauf in die Pumpenvorlage (32) einer pneumatischen Flotationsanlage 33) eingeleitet wird. Der Flotationsanlage (33) werden Flotationschemikalien zugeführt und die Leichtstoffe mit einer Korngröße von 10 bis maximal 150 μm aus dem Boden flotiert. Sie gelangen als Flotat in eine Aufbereitungsanlage (34) für das Prozeßwasser und werden dort abgetrennt; das gereinigte Wasser wird im Kreislauf über die Leitung (35) wieder in den Extraktionsprozeß eingeschleust. Die Zufuhr des Frischwassers in die Aufbereitungsanlage (34) erfolgt über die Leitung (36). Über die Leitung (37) wird ein Teilstrom des Prozeßwassers ausgeschleust, um den Salzgehalt konstant zu halten. Das gereinigte Feinprodukt, das in der Flotationsanlage (33) anfällt, gelangt über eine Pumpvorlage (38) in eine mehrstufige Gegenstrom-Hydrozyklonanlage (39), in der es im Gegenstrom gespült wird, und wird dann dem Endproduktensieb (28) als Deckschicht aufgegeben.

Das als Überlauf in dem Hydrozyklon (14) anfallende Produkt mit einer Korngröße von 0 bis 150 μm, vorzugsweise 0 bis 10 μm wird den Eindickern (40) zugeführt und auf ca. 8 bis 15 % eingedickt. Das eingedickte Produkt wird mechanisch entwässert und der Schlammtrocknung aufgegeben. Der ölhaltige Überlauf, der in dem Eindicker (40) anfällt, wird über eine Leitung (41) einer Flotationsstufe der Aufbereitungsanlage (34) zugeführt, während die sonstigen Abwässer über eine Leitung (42) in die der Flotationsstufe nachgeschalteten Stufen der Aufbereitungsanlage (34) eingeleitet werden. Im Regelfall besteht die Aufbereitungsanlage (34) aus einer Flotationsstufe mit nachgeschalteter Oxidations- oder Reduktionsstufe, einer Fällungs- und Flockungsstufe, einer Sedimentationsstufe, Filtrationsstufe sowie einer Ausblasekolonne (Stripper), einer Aktivkohlefilterstufe und einer Selektivaustauscherstufe. Je nach Schadstoffinhalt werden verschiedene Stufen zu- bzw. abgeschaltet, so daß das Wasser entsprechend den gesetzlichen Vorschriften gereinigt wird.

Der bei der Abwasserreinigung anfallende Schlamm wird einer mechanischen Entwässerung unterworfen. Er enthält den größten Teil der im Boden befindlichen Schadstoffe. Ein Teil der Schadstoffe befindet sich in den abgeschiedenen Leichtstoffen, wie Kohle, Holzkohle, Teer und dergleichen, ein geringerer Teil wird aus der Abluft über die Aktivkohlestufe mit nachfolgender Dampfregeneration als Flüssigprodukt gewonnen. Dabei handelt es sich um die leichtflüchtigen Stoffe. In dem der Flotation vorgeschalteten Ölabscheider werden die schwerflüchtigen aufschwimmenden bzw. sedimentierbaren Stoffe entfernt und als Altöl entsorgt.

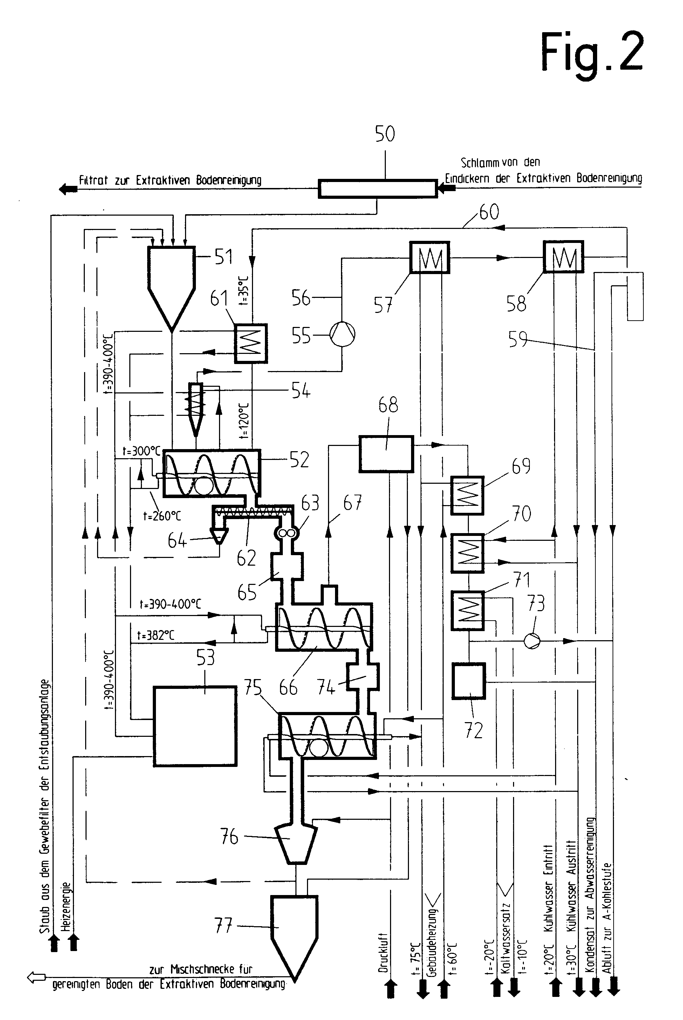

Die weitere Behandlung des in dem Eindicker (40) anfallenden Schlammes ist in Fig. 2 dargestellt. Der eingedickte Schlamm wird zunächst einer mechanischen Entwässerungseinrichtung (50) zugeführt, in der er bis auf einen Gehalt von ca. 60 % Trockensubstanz entwässert wird. Das anfallende Filtrat wird dem Extraktionsprozeß bzw. der Abwasserreinigung über die Leitung (43) (Fig. 1) zugeführt, während der entwässerte Boden gleichmäßig dosiert, über ein Zwischensilo (51) einem Trockner (52) aufgegeben wird. Der Trockner wird mit Dampf bzw. Wärmeträgermedium aus einem Wärmeerzeuger (53) beschickt. Vorzugsweise wird ein Schneckentrockner benutzt, bei dem die Flächen und die Wandung der Hohlschnecken als Wärmeüberträger dienen. Die entsprechenden Brüden werden in Multizyklonen (54) von Feststoffen befreit, die wieder in den Trockner zurückgeleitet werden. Die am Kopf der Zyklone (54) anfallenden Brüden werden über ein Gebläse (55) und die Leitung (56) einem Kondensator (57) zugeführt. Die darin anfallende Energie kann beispielsweise zur Gebäudeheizung entnommen werden. Ein nachgeschalteter Kondensator (58) kühlt die Abluft auf ca. 25 °C herunter. Das Kondensat wird über die Leitung (59) der Abwasseraufbereitung bzw. -reinigung zugeführt, während ein Teil der Abluft, deren Temperatur etwa 35 °C beträgt, über die Leitung (60) und einen Erhitzer (61), in dem sie auf eine Temperatur von etwa 120 °C erwärmt wird, zum Trockner (52) als Spülluft zurückgeführt wird. Der Erhitzer (61) wird mit Dampf oder einem anderen Medium aus dem Wärmeerzeuger (53) beaufschlagt. Der in dem Schneckentrockner (52) behandelte Boden wird über eine Schnecke (62) abgezogen und einer Mühle (63) zugeführt, in der er deagglomeriert wird. Die Schnecke (62) ist so ausgebildet, daß sie zur Entleerung des Trockners gegenläufig in ein pneumatisches Fördersystem (64) fördern kann, mit dem der Boden zurück in das Silo (51) gefördert wird. Das die Mühle (63) verlassende Produkt gelangt über eine Vakuumschleuse (65) in eine Vakuumdestillationseinheit (66), in der der Boden mit Hilfe von Wärmeträgeröl oder einer Salzschmelze auf eine Temperatur von vorzugsweise 380 °C Produkttemperatur erhitzt wird.

Die Verweilzeit in der Vakuumdestillationseinheit beträgt im Regelfall mehr als eine Stunde. Die gebildeten Gase werden über die Leitung (67) abgezogen und über ein zur Vermeidung von Kondensation beheiztes Hochtemperaturfilter (68), in dem die Gase entstaubt werden, einer ersten Kondensationsstufe (69) zugeführt. Die darin anfallende Energie kann beispielsweise für die Gebäudeheizung genutzt werden. In der zweiten Kondensationsstufe (70) wird die Luft bis auf eine Temperatur von ca. 25 °C mit Kühlwasser heruntergekühlt und in der dritten Kondensationsstufe (71) mit Hilfe eines Kaltwassersatzes mit Sole mit einer Temperatur von -20 bis -25 °C bis auf 5 °C gekühlt. Das Kondensat wird über die Kondensat-Pumpenstation (72) der Flotationsanlage der Abwasserreinigung zugeführt. Über eine Wasserring-Vakuumpumpe (73) wird ein Unterdruck von 20 bis 50 Torr abs. Druck erzeugt. Das zum Betreiben der Wasserringpumpe benötigte Zusatzwasser wird ebenfalls der Abwasserreinigung zugeführt.

Der gereinigte Boden wird aus der Vakuumdestillationseinheit (66) über Vakuumschleusen (74) einem Kühler (75) zugeführt. Die benötigte Kühlenergie wird ebenfalls zur Gebäudeheizung eingesetzt. Der Kühler ist zweistufig aufgebaut. In einer Nachkühlung mit Wasser wird die Produkttemperatur des Bodens bis auf eine Temperatur von ca. 40 bis 50 °C gesenkt. Das Produkt wird dann über eine pneumatische Fördereinrichtung (76) einem Produktsilo (77) zugeführt, das oberhalb der Mischschnecke (29) (Fig. 1) angeordnet ist. Der Staub aus dem Gewebefilter der Entstaubungsanlage, z. B. der Brecherstation und der Siebstation, wird dem Zwischsilo (51) zugeführt und über das beschriebene Vakuumdestillationssystem gereinigt.

## Patentansprüche

1. Verfahren zur Entfernung von Schadstoffen aus verunreinigtem Boden, bei dem der von groben Bestandteilen durch Sieben oder Brechen vorgereinigte Boden einer Extraktion durch mit Zustzmittel versetzem Waschwasser unterworfen, der Boden anschließend vom Waschwasser getrennt, mit Spülwasser nachgespült und das Wasser durch einen Reinigungsprozeß von den aus dem Boden extrahierten Schadstoffen befreit wird, dadurch gekennzeichnet, daß der Extraktionsprozeß mit Waschwasser weitgehend getrennt von dem ein- oder mehrstufigen Spül- und Sortierungsprozeß durchgeführt wird, daß vor der Extraktion durch trockene oder nasse Klassierverfahren eine Feinstfraktion mit einer Korngröße bis 150 µm abgetrennt wird und daß die getrocknete Feinstfraktion einer Destillation bei einer Temperatur von 300 bis höchstens 600 °C unterworfen und von organischen Schadstoffen sowie von Cyanid- und Quecksilberverbindungen gereinigt wird.

2. Verfahren nach Anspruch 1, gekennzeichnet durch die Kombination der folgenden Merkmale:

a) Der verunreinigte Boden wird nach Abtrennung einer Fraktion mit einer Korngröße bis 150 µm zur Entfernung von Schadstoffen durch Extraktion mit Waschwasser mit hoher Energiedichte gewaschen und nachdem das Waschwasser weitgehend abgetrennt ist, durch Gegenstromspülung bei gleichzeitigem Sortieren nach Dichte und anschließendem Entwässern von Leichtstoffen und anhaftender Extraktionslösung befreit, worauf der Unterlauf der Sortierung mit einer Korngröße von 100 µm bis 4 mm entwässert und abgeführt wird, während der die Feinstoffe enthaltende Überlauf der Sortierung durch Flotation von Leichtstoffen befreit und das Sediment aus der Flotation, das die Fraktion mit einer Korngröße von 10 bis maximal 150 µm enthält, in einer Gegenstrom-Hydrozyklonanlage gespült wird.

b) Vor der Extraktion wird durch trockene oder nasse Klassierverfahren eine Feinstfraktion mit einer Korngröße bis 150 µm abgetrennt und im Falle einer Naßtrennung entwässert, eingedickt und einer Trocknung unterworfen.

c) Die getrocknete Feinstfraktion wird deagglomeriert und einer Vakuumdestillation bei einer Temperatur von etwa 380 °C bei einem Vakuum von 20 bis 100 Torr abs. Druck unterworfen, anschließend gekühlt und als gereinigtes Fertigprodukt ausgeschleust.

3. Verfahren nach Anspruch 2, dadurch gekennzeichnet, daß der Unterlauf der Sortierung vor der Entwässerung einem zweitem, als Kaskade geschalteten Spül-/Sortierprozeß unterworfen wird.

4. Verfahren nach einem der Ansprüche 1 bis 3, dadurch gekennzeichnet, daß dem Waschwasser, mit dem der Extraktionsprozeß durchgeführt wird, Zusatzmittel zugesetzt werden.

5. Verfahren nach einem der Ansprüche 1 bis 4, dadurch gekennzeichnet, daß aus dem Boden vor der Extraktion eine Feinstfraktion mit einer Korngröße bis 10 µm abgetrennt wird.

6. Verfahren nach einem der Ansprüche 1 bis 5, dadurch gekennzeichnet, daß aus dem Boden vor der Abtrennung der Feinstfraktion mit einer Korngröße bis 150 µm die groben Bestandteile mit einer Korngröße über 4 mm abgetrennt und gesondert nach Abscheidung der Leichtstoffe gespült, entwässert, nachgewaschen und als Kiesfraktion ausgeschleust werden.

7. Verfahren nach einem der Ansprüche 1 bis 5, dadurch gekennzeichnet, daß die groben Bestandteile mit einer Korngröße über 4 mm nach der Extraktion abgetrennt und gesondert nach Abscheidung der Leichtstoffe gespült, entwässert, nachgewaschen und als Kiesfraktion ausgeschleust werden.

8. Verfahren nach einem der Ansprüche 1 bis 7, dadurch gekennzeichnet, daß der Unterlauf der Gegenstromspülung und Dichtesortierung mit einer Korngröße von 100 µm bis 4 mm entwässert und klassiert und das Spülwasser der Klassierung kaskadenförmig in die vorliegende Spülstufe eingeleitet wird, während das bei der Klassierung anfallende Produkt einer zweiten Gegenstromspülung und Dichtesortierung unterworfen, dann entwässert und, mit dem bei der Destillation anfallenden Fertigprodukt gemischt, als gereinigter Boden entsorgt wird.

9. Verfahren nach einem der Ansprüche 1 bis 9, dadurch gekennzeichnet, daß der beim Eindicken anfallende ölhaltige Überlauf in einer der Abwasser-Aufbereitungsanlagen vorgeschalteten Flotationsstufe flotiert wird.

10. Verfahren nach einem der Ansprüche 1 bis 9, dadurch gekennzeichnet, daß zum Trocknen der entwässerten Feinstfraktion Dampf oder ein anderes Heizmedium verwendet wird, die anfallenden Brüden von Feststoffen befreit und die Feststoffe wieder in den Trockner zurückgeleitet werden, während die Brüden zur Rückgewinnung der Energie kondensiert werden.

11. Verfahren nach Anspruch 10, dadurch gekennzeichnet, daß das bei der Kondensation anfallende Kondensat der Abwasser-Aufbereitungsanlage zugeführt wird, während die anfallende Abluft auf eine Temperatur von etwa 120 °C aufgewärmt und als Spülluft in den Prozeß zurückgeführt wird.

12. Verfahren nach einem der Ansprüche 1 bis 11, dadurch gekennzeichnet, daß als Wärmeträger für die indirekte Beheizung des Trockners Thermoöl oder Salzschmelzen eingesetzt werden.

13. Verfahren nach einem der Ansprüche 1 bis 12, dadurch gekennzeichnet, daß die Verweilzeit der getrockeneten Feinstfraktion in der Vakuumdestillationseinheit mehr als 1/2 bis 2 Stunden beträgt.

14. Anlage zur Durchführung des Verfahrens nach den Ansprüchen 1 bis 13, dadurch gekennzeichnet, daß die Abtrennung der Fraktion mit der Korngröße bis 150 µm vor der Extraktion des Bodens in einem Hydrozyklon (14) erfolgt und die Behandlung des Unterlaufs des Hydrozyklons in einem Anmaischbehälter (15) vorgenommen wird, in den mechanische Energie eingeleitet wird, daß dem Überlauf der Dichtesortier-Einrichtung (21) ein Hydrozyklon (31) nachgeschaltet ist, dessen Unterlauf der Flotationseinrichtung (33) zugeleitet wird und daß die Einrichtung (34) zur Aufbereitung des Abwassers aus einer Flotationsstufe mit nachgeschalteter Oxydations- oder Reduktionsstufe, einer Fällungs- und Flockungsstufe, einer Sedimentationsstufe, Filtrationsstufe sowie einer Ausblasekolonne (Stripper), einer Aktivkohlefilterstufe und einer Selektivaustauscherstufe besteht.

15. Anlage nach Anspruch 14, dadurch gekennzeichnet, daß die mechanische Energie in den Anmaischbehälter (15) über ein Rührwerk mit regelbarer Drehzahl und/oder durch Schwingungsenergie eingebracht wird.

16. Anlage nach den Ansprüchen 14 und 15, dadurch gekennzeichnet, daß der Trockner (52) aus einem Schneckentrockner mit Hohlschnecken besteht, deren Flächen und Wandung als Wärmeüberträger dienen.

## Claims

1. Process for removing harmful substances from contaminated soil, in which the soil which is pre-cleansed of coarse constituents by sieving or crushing is subjected to extraction through washing water which is mixed with additives, the soil is then separated from the washing water, is re-rinsed with rinsing water and the water is freed by a cleansing process from the harmful substances which are extracted from the soil, characterized in that the extraction process with washing water is carried out completely separately from the single or multi- stage rinsing and sorting process, that a finest fraction with a grain size of up to 150 µm is separated by dry or wet grading processes before extraction, and that the dried finest fraction is subjected to distillation at a temperature of 300 to a maximum of 600°C and is cleansed of organic harmful substances and also cyanide and mercury compounds.

2. Process as claimed in Claim 1, characterized by the combination of the following features:
a) The contaminated soil is washed after separation of a fraction with a grain size of up to 150 µm to remove harmful substances through extraction with washing water having high energy density, and after the washing water has been completely separated, is freed from light substances and adhering extraction solution by counter-flow rinsing, with simultaneous sorting according to density and subsequent dehydration, whereupon the discharge of the sorting with a grain size of 100 µm to 4 mm is dehydrated and conveyed away, whilst the upper course of the sorting containing the fine substances is freed from light substances by flotation and the sediment from the flotation, which contains the fraction with a grain size of 10 to a maximum of 150 µm, is rinsed in a counter-flow hydrocyclone plant.

EP 0 388 487 B1

b) A finest fraction with a grain size of up to 150 μm is separated by dry or wet grading processes before extraction, and in the case of wet separation, dehydrated, thickened and subjected to drying.

c) The dried finest fraction is deagglomerated and subjected to vacuum distillation at a temperature of roughly 380°C in a vacuum of 20 to 100 Torr absolute pressure, then cooled and extracted as cleansed finished product.

3. Process as claimed in Claim 2, characterized in that the discharge of the sorting, before dehydration, is subjected to a second rinsing/sorting process which is operated as a cascade.

4. Process as claimed in one of Claims 1 to 3, characterized in that additives are mixed with the washing water with which the extraction process is carried out.

5. Process as claimed in one of Claims 1 to 4, characterized in that a finest fraction with a grain size of up to 10 μm is separated from the soil before extraction.

6. Process as claimed in one of Claims 1 to 5, characterized in that the coarse constituents with a grain size of over 4 mm are separated from the soil before the separation of the finest fraction with a grain size of up to 150 μm, and after precipitation of the light substances, are separately rinsed, dehydrated, re-washed and extracted as a gravel fraction.

7. Process as claimed in one of Claims 1 to 5, characterized in that the coarse constituents with a grain size of over 4 mm are separated after extraction, and after precipitation of the light substances, are rinsed, dehydrated and re-washed separately, and are extracted as a gravel fraction.

8. Process as claimed in one of Claims 1 to 7, characterized in that the discharge of the counter-flow rinsing and density sorting with a grain size of 100 μm to 4 mm is dehydrated and graded and the rinsing water of the grading is introduced cascadingly into the existing rinsing stage, whilst the product which is produced during the grading is subjected to a second counter-flow rinsing and density sorting, then dehydrated and, mixed with the finished product which is produced during distillation, is disposed of as cleansed soil.

9. Process as claimed in one of Claims 1 to 8, characterized in that the overflow containing oil, which is produced during thickening is floated in a flotation stage which is arranged before the effluent preparation plants.

10. Process as claimed in one of Claims 1 to 9, characterized in that steam or another heating medium is used for drying the dehydrated finest fraction, the occurring vapours are freed from solid substances and the solid substances are conveyed back into the drier, whilst the vapours are condensed in order to recover the energy.

11. Process as claimed in Claim 10, characterized in that the condensate occurring during the condensation is fed to the effluent preparation plant, whilst the occurring outgoing air heated to a temperature of roughly 120°C is conveyed back into the process as rinsing air.

12. Process as claimed in one of the Claims 1 to 11, characterized in that thermooil or molten salts are used as heat transfer agents for the indirect heating of the drier.

13. Process as claimed in one of the Claims 1 to 12, characterized in that the dwell period of the dried finest fraction in the vacuum distillation unit is more than 1/2 to 2 hours.

14. Plant for carrying out the process as claimed in Claims 1 to 13, characterized in that the separation of the fraction with the grain size of up to 150 μm takes places in a hydrocyclone (14) before extraction of the soil, and the treatment of the bottom discharge of the hydrocyclone is carried out in a mashing tank (15), into which mechanical energy is introduced, that a hydrocyclone (31) is arranged after the overflow of the density sorting device (21), whose bottom discharge is conveyed to the flotation device (33), and the device (34) for preparing the effluent is composed of a flotation stage with a downstream oxidation or reduction stage, a precipitation and flocculation stage, a sedimentation stage, filtration stage and also a blow-off column (stripper), and active coal filter stage and a selective exchanger stage.

15. Plant is claimed in Claim 14, characterized in that the mechanical energy is introduced into the mashing tank (15) via an agitator with a controllable speed and/or by vibration energy.

116. Plant as claimed in Claims 14 and 15, characterized in that the drier (52) is composed of a screw drier with hollow worms whose surfaces and wall serve as heat transfer agents.

## Revendications

1. Procédé pour éliminer les éléments polluants d'un sol contaminé, dans lequel le sol qui a été précédemment débarrassé d'éléments grossiers par tamisage ou broyage est soumis à une extraction avec de l'eau de lavage mélangée à des produits additionnels, le sol est ensuite séparé de l'eau de lavage, rincé avec de l'eau de rinçage et l'eau est débarrassée par un procédé de nettoyage des éléments polluants extraits du sol, caractérisé en ce que le processus d'extraction par l'eau de lavage est réalisé en étant largement séparé du

7

processus de rinçage et de tri à un ou plusieurs étages, en ce que l'on sépare avant l'extraction et par un procédé de classification à sec ou au mouillé, une fraction ultra-fine dont la dimension des grains atteint 150 µm, et en ce que l'on soumet la fraction ultra-fine séchée à une distillation à une température de 300 à 600°C au maximum et on la débarrasse des éléments polluants organiques ainsi que des liaisons à cyanure et mercure.

2. Procédé selon la revendication 1, caractérisé par la combinaison des caractéristiques suivantes:

a) Le sol pollué est lavé après séparation d'une fraction dont les grains ont des dimensions allant jusqu'à 150 µm pour l'élimination des éléments polluants par extraction avec de l'eau de lavage à forte densité d'énergie qui est ensuite largement séparée, débarrassé des matières légères et des solutions d'extraction adhérentes par rinçage à contre-courant et avec simultanément une classification selon la densité, puis élimination de l'eau, suite à quoi la couche inférieure du classement dont la dimension des grains est comprise entre 100 µm et 4 mm est débarrassée de son eau et évacuée alors que la couche supérieure de la classification contenant la matière ultra-fine est débarrassée des matières légères par flottation, et le sédiment provenant de la flottation qui contient la fraction dont la dimension des grains est comprise entre 10 et au maximum 150 µm est rincée à contre-courant dans une installation à hydrocyclone.

b) Avant l'extraction, une fraction ultra-fine dont la dimension des grains va jusqu'à 150 µm est séparée par un procédé de classification à sec ou au mouillé, débarrassée de son eau dans le cas d'une séparation au mouille, épaissie et soumise à un séchage.

c) La fraction ultra-fine séchée est désagglomérée et soumise à une distillation sous vide à une température d'environ 380°C pour un vide de 20 à 100 torrs de pression absolue, ensuite refroidie et éclusée sous forme d'un produit fini et propre.

3. Procédé selon la revendication 2, caractérisé en ce que la couche inférieure du classement est soumise avant la déshydratation a un second processus de rinçage/classement monté en cascade.

4. Procédé selon l'une quelconque des revendications 1 à 3, caractérisé en ce que des produits additionnels sont ajoutés à l'eau de lavage avec laquelle est effectué le processus d'extraction.

5. Procédé selon l'une quelconque des revendications 1 à 4, caractérisé en ce qu'une fraction ultra-fine dont la dimension des grains va jusqu'à 10 µm est séparée du sol avant l'extraction.

6. Procédé selon l'une quelconque des revendications 1 à 5, caractérisé en ce qu'avant l'extraction de la fraction ultra-fine dont la dimension des grains va jusqu'à 150 µm, les éléments composants grossiers provenant du sol et dont la dimension des grains est supérieure à 4 mm sont séparés, puis rincés, déshydratés, à nouveau lavés et éclusés sous forme d'une fraction de graviers de façon séparée et après séparation des matières légères.

7. Procédé selon l'une quelconque des revendications 1 à 5, caractérisé en ce que les éléments composants grossiers dont la dimension des grains est supérieure à 4 mm sont séparés après l'extraction et sont rincés, déshydratés, relavés et éclusés sous forme d'une fraction de graviers de façon séparée après séparation des matières légères.

8. Procédé selon l'une quelconque des revendications 1 à 7, caractérisé en ce que la couche inférieure du rinçage à contre-courant et du classement par densité, dont la dimension des grains est comprise entre 100 µm et 4 mm, est déshydratée et classifiée et l'eau de rinçage de la classification est envoyée en cascade dans l'étage de rinçage situé en amont, alors que les produits qui proviennent de la classification sont soumis à un second rinçage ç contre-courant et à un classement par densité, puis déshydratés et mélangés au produit final qui se dépose lors de la distillation, et sont évacués sous forme d'un sol épuré.

9. Procédé selon l'une quelconque des revendications 1 à 8, caractérisé en ce que la couche supérieure contenant de l'huile qui provient de l'épaississement est amenée à flotter dans un étage de flottation qui est en amont de l'installation de traitement des eaux usées.

10. Procédé selon l'une quelconque des revendications 1 à 9, caractérisé en ce que pour sécher la fraction ultra-fine déshydratée, on utilise de la vapeur ou autre agent thermique, les vapeurs qui s'échappent sont débarrassées des produits solides et les produits solides sont renvoyés dans le sécheur alors que les vapeurs sont condensées en vue de la récupération de l'énergie.

11. Procédé selon la revendication 10, caractérisé en ce que le condensat qui se dépose lors de la condensation est envoyé à l'installation de traitement d'eaux usées, alors que l'air d'échappement qui en provient est réchauffé à une température d'environ 120°C et renvoyé en tant qu'air de balayage dans le procédé.

12. Procédé selon l'une quelconque des revendications 1 à 11, caractérisé en ce que l'on utilise de l'huile thermique ou une masse fondue de sel comme agent de transmission de la chaleur pour le chauffage indirect du sécheur.

13. Procédé selon l'une quelconque des revendications 1 à 12, caractérisé en ce que la durée de séjour de la fraction ultra-fine séchée dans l'installation de distillation sous vide est supérieure à 1/2 à 2 heures.

14. Installation pour la mise en oeuvre du procédé selon les revendications 1 à 13, caractérisée en ce que la séparation de la fraction dont la dimension des grains va jusqu'à 150 µm s'effectue avant l'extraction du sol dans un hydrocyclone (14) et le traitement de la couche inférieure de l'hydrocyclone est renvoyée dans un récipient de trempe (15) dans lequel est appliquée une énergie mécanique, en ce qu'un hydrocyclone est monté à la suite de la couche supérieure du dispositif de classement par densité (21), dont la couche inférieure est envoyée au dispositif de flottation (33), et en ce que le dispositif (34) de traitement des eaux usées est constitue par un étage de flottation avec étage d'oxydation ou réduction monte à la suite, un étage de précipitation et de floculation, un étage de sédimentation, un étage de filtration ainsi qu'une colonne de purge (stripper), un étage de filtration à charbon actif et un étage échangeur sélectif.

15. Installation selon la revendication 14, caractérisée en ce que l'énergie mécanique est appliquée au récipient de trempe (15) par un mécanisme agitateur à vitesse de rotation réglable et/ou par une énergie oscillante.

16. Installation selon les revendications 14 et 15, caractérisée en ce que le sécheur (52) est constitué par un sécheur à vis creuse, dont les surfaces et la paroi servent d'éléments de transmission de la chaleur.

# Fig.1

# Fig.2

Schlamm von den
Eindickern der Extraktiven Bodenreinigung

Filtrat zur Extraktiven Bodenreinigung

50

51    61    t=35°C    56    57    58    59    60

55    54

t=390-400°C    t=120°C    68    69

t=300°C    52    70

t=260°C    63    67    71

64    62    65    73

t=390-400°C    72

t=382°C    66    74

53    75    76

77

Staub aus dem Gewebefilter der Entstaubungsanlage

Heizenergie

zur Mischschnecke für
gereinigten Boden der Extraktiven Bodenreinigung

Druckluft
t=75°C  Gebäudeheizung
t=60°C
t=-20°C  Kaltwassersatz
t=-10°C
t=20°C  Kühlwasser Eintritt
t=30°C  Kühlwasser Austritt
Kondensat zur Abwasserreinigung
Abluft zur A-Kohlestufe